# EUROPEAN PATENT SPECIFICATION

(11) **EP 2 338 720 B1**
(45) Date of publication and mention of the grant of the patent: **19.07.2017**
(21) Application number: 09425532.0
(22) Date of filing: 24.12.2009
(51) Int. Cl.: B60K 35/00

(54) **Management system of on-board vehicle instruments, especially for industrial or commercial vehicles**
Bedien- und Konfigurationssystem für Fahrzeugsysteme, insbesondere für industrielle und Nutzfahrzeuge
Système pour la manipulation et la configuration des systèmes véhiculaires, particulièrement pour des véhicules industriels et utilitaires

(43) Date of publication of application: 29.06.2011
(73) Proprietor: Iveco S.p.A., 10156 Torino (IT)
(72) Inventor: Nicosia, Biagio, 10141 Torino (IT)
(74) Representative: Franzolin, Luigi

(56) References cited:
- EP-A1- 0 569 243
- EP-A1- 2 146 260
- WO-A1-00/75736
- WO-A2-99/06987
- DE-A1- 10 159 477
- US-A- 4 731 769
- US-A- 5 808 374
- US-A1- 2004 158 371

## Description

### Application field of the invention

The present invention refers to the field of the on-board vehicle instrument management, especially for industrial or commercial vehicles.

### Description of the prior art

In the field of motor vehicles, especially automobiles, instrument management systems exploiting the interaction of the driver with a display are known in the art. In particular, said display allows to control the satellite navigator and/or the automobile radio receiver. The same display may be used as a device for showing movies.
It is know in the art to equip automobiles, especially the most expensive ones, with a control device including a display, some buttons, and a rotating knob that can be operated by pressing it. Said device is contrived to control the integrated navigation system, the vehicle phone, the entertainment system and the air-conditioning device.
Some buttons may also be programmed according to the driver's needs, but said buttons are just a few and they relate to the few functions that can be controlled by the device. The functions that have to be controlled more immediately are controlled with the traditional buttons, also in such expensive vehicles.
For example, the windshield defrosting function or the activation of the hazard warning lights cannot be operated by means of a long navigation into the menus of a control device as mentioned above.
In the industrial vehicle field, wherein cabins have to be very robust, also the instrument panels have to be particularly robust and easy-to-use for the drivers, who, as users, are very different from luxury car drivers.
A problem that is particularly felt in the industrial vehicle field, but also in the automobile field, is that of realizing as many control panels as the number of vehicle models being produced, for all the versions and for all the possible on-board equipment.
According to what was said above, this problem implies that, also in case of a luxury vehicle equipped with the aforementioned known control device, dashboards should include specific buttons, for example for the traction control, only in case they are actually equipped with that function.
US4731769, US4731769, US5808374, DE10159477 of the prior art show systems for adjusting the dashboard functions according to the driver preferences. Their features are in the preamble of the claim 1.

### Summary of the invention

Therefore the aim of the present invention is to overcome all the aforementioned drawbacks and to provide a management system of on-board vehicle instruments, especially for industrial or commercial vehicles.

The subject of the present invention is, as defined by the features of claim 1, a management system of on-board vehicle instruments, especially for industrial or commercial vehicles, comprising: a programmable control unit; a touch display suitable for showing, at least in an area, at least an ideogram representing a function of an on-board instrument; one or more buttons that can be associated to said function of said on-board instrument, said control unit being programmable in order to control the layout of said ideogram in said display area and said association with said button.

The dependent claims describe the preferred embodiments of the invention, and are an integral part of this description.

### Brief description of the Figures

Further purposes and advantages of the present invention will become clear from the following detailed description of a preferred embodiment (and relative alternative embodiments) and the drawings that are attached hereto, which are merely illustrative and non-limitative, in which:

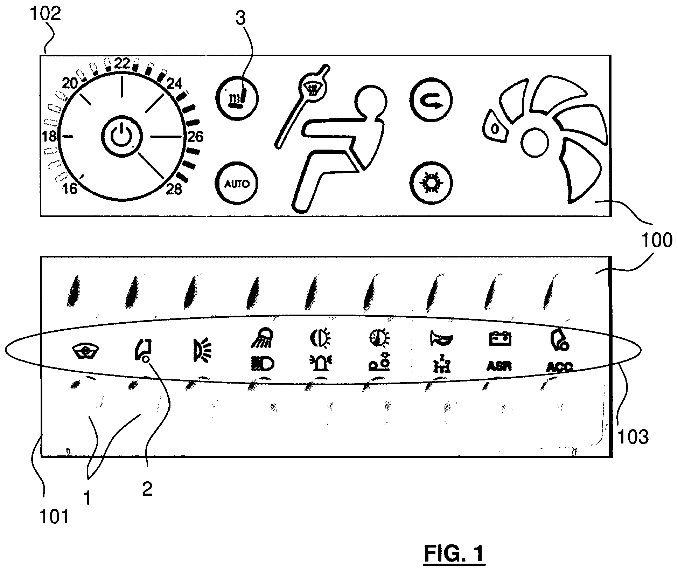

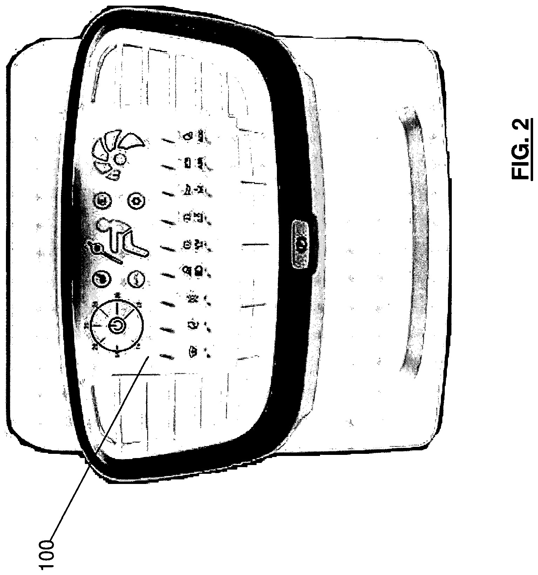

figures 1 and 2 show layout schemes of the on-board instrument control system according to the present invention. In the drawings the same reference numbers and letters identify the same elements or components.

### Detailed description of preferred embodiments of the invention

In reference to figure 1, according to a first alternative embodiment, the on-board instrument control system comprises a display 100 comprising at least an area 103 suitable for showing ideograms.
First buttons 1, placed next to said area 103 may be of a mechanical type, for example switch or micro-switch, or of a touch-sensitive type, based on the capacitive effect, or, more in general, on the so-called touch technology. In the same figure, further buttons 3 are shown where ideograms are represented on the buttons themselves. According to said alternative embodiment said second buttons 3 are of the traditional type.
According to another alternative embodiment of the invention, the on-board instrument control system comprises a touch display 100, comprising an area 101 wherein a plurality of first buttons 1 and respective ideograms 2 are shown, placed next to the respective buttons which represent the on-board function controlled by each button. According to said alternative embodiment, said buttons 1 are virtual, namely they are represented and defined by the touch display 100.
In the same picture, a second area 102 of the display 100 shows second buttons 3, each one of them shows its respective ideogram which represents the function associated to the button itself. Optionally, also said second buttons 3 are virtual, namely they are defined and graphically represented by the touch display 100 and therefore also the respective ideograms are realized by the same touch display.
A further alternative embodiment of the control system is a combination of said first two variants. It contrives a second area 102 of the touch display and a first area 103 of the display 100 which is not equipped with the touch function. According to said further alternative embodiment, said second buttons 3, and their respective ideograms represented on them, are defined by said second area of the touch display, while said first buttons 1 are of the mechanical or of the electronic type and their respective ideograms, placed next to the buttons, are shown in said first area 103 of the display.
According to the present invention, at least one or more ideograms are always shown on screen, namely it is not necessary to enable their visualization by means of a menu navigation, etc.. Preferably the display is at least partially off when the key is not inserted in the ignition lock. Some portions of the display are active also when the key is not inserted in the ignition lock, since said portions show ideograms associated to functions that are active also when the key is not inserted in the ignition lock, such as for example the functions relating to the automobile radio receiver.
The buttons which generate a reaction relating to the ideograms shown on the display and which are placed, preferably, next to their respective ideograms, may be of the mechanical or of the electronic type, or of the virtual type, namely a type defined and shown by an area of the touch display.
As an alternative, or in combination, the ideograms may be shown on the outline of the button defined and shown by the touch display.
Said display is controlled by a control unit, preferably comprising a first and a second memory area. The following items are allocated in said first memory area:
- operating instructions of the control unit,
- control instructions of at least a function of a vehicle on-board instrument,
- a graphical representation of an ideogram relating to said function of said on-board instrument.
Said second memory area stores the localization of said ideogram on the display, namely the graphical layout of the display, and a relation of association between a button ID and said function of said on-board instrument, being the button mechanical or electronic or virtual.
Advantageously, the ideograms, being always shown on screen and being associated to their respective buttons, allow an easy and immediate activation/control of the respective functions of the vehicle on-board instrument, thus avoiding the driver being distracted by a long graphical menu navigation.
According to another aspect of the invention, said first memory area is programmed outside the vehicle, for example in the factory, when the control device is mounted on the vehicle, by considering which instruments and which accessories equip the vehicle, thus, advantageously, a single control device may be used for a plurality of different vehicles.
The only restriction is that the number of the buttons 1 and/or 3 has to be higher than the maximum number of functions that are controlled by the device. Possible mechanical and/or electronic buttons in excess with respect to said functions are not enabled during said programming in the factory.
Optionally, it is possible to program in the factory also said second memory area, thus defining the disposition of the ideograms on the control device and their association with the respective buttons, being either mechanical or electronic or virtual.
A further programming of said second memory area may be performed in garage, according to particular needs and preferences of the driver, or it may be performed directly by the driver.
In order to program said second memory area for defining the layout of the on-board instrument control device, said control unit may comprise interface means for connecting to an external programming unit, or a guided procedure for configuring the control device may be activated.
So, when the driver presses a button of the vehicle control device, said control unit verifies the pre-set association between the pressed button, namely the button ID, and a function and it activates/deactivates or adjusts said function.
According to a preferred alternative embodiment of the invention, the layout configuration, namely the programming of said second memory area, may be associated to the transponder of an ignition key of the vehicle. Thus, two or more ignition keys may be associated to the same number of different programming. This allows different drivers of the same vehicle to use the on-board instrument control device according to their own preferences and needs. According to this preferred alternative embodiment, said second memory area is split into two or more sub memory areas, each of them being associated to an ignition key.
For example, each sub area may be marked by the respective transponder ID stored in the ignition key of the vehicle. Further alternative embodiments include acoustic warnings when touching the buttons, or vibration of the buttons themselves.
It is possible to re-configure the display in order to obtain other functions, such as for example entertainment functions, information functions, or keyboard and reconfiguration menu functions.
The present invention may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other equivalent embodiments, and their combinations, of the invention can be conceived and reduced to practice without departing from the scope of the invention.

From the description set forth above it will be possible for the person skilled in the art to embody the invention with no need of describing further construction details.

## Claims

1. Management system of on-board vehicle instruments, especially for industrial or commercial vehicles, comprising: a programmable control unit; a touch display (100) suitable for showing, at least in an area (103), at least an ideogram (2,3) representing a function of an on-board instrument; one or more buttons (1,3) that can be associated to said function of said on-board instrument, said control unit being programmable in order to control the layout of said ideogram in said area (103) of the display (100) and said association with said button (1,3), wherein a layout configuration, namely a different programming of said control unit, is associated to a different transponder of an ignition keys of the vehicle, being possible that two or more ignition key are associated to the same number of different programming
**Characterized in that** the touch display (100) is at least partially off when the key is not inserted in the ignition lock and **in that** some portions of the touch display (100) are active also when an ignition key is not inserted in the ignition lock, said portions showing ideograms associated to functions that are active also when an ignition key is not inserted in the ignition lock.

2. Management system of on-board vehicle instruments as in claim 1, wherein said one or more buttons are of the mechanical type, or of the touch-sensitive type, based on the capacitive effect, or on the touch technology, with ideograms.

3. Management system of on-board vehicle instruments as in claim 1, wherein said touch display comprises an area wherein a plurality of first buttons 1 and respective ideograms 2 are shown, placed next to the respective buttons which represent the on-board function controlled by each button, said buttons being of the virtual type.

4. Management system of on-board vehicle instruments as in claim 3, wherein at least one or more ideograms are always shown on screen, without having to enable their visualization by means of a menu navigation.

5. Management system of on-board vehicle instruments as in any of the previous claims, **characterized in that** the programming of said control unit is performed outside the vehicle, and **in that** a single control device may be used for a plurality of different vehicles.

6. Management system of on-board vehicle instruments as in claim 1, wherein the touching of the buttons is associated tp acoustic warnings, or to the vibration of the buttons themselves.

7. Management system of on-board vehicle instruments as in claim 1, wherein said display can be re-configured, in order to obtain further entertainment or information functions, or keyboard and reconfiguration menu functions.

8. Vehicle comprising a management system of on-board vehicle instruments as in any of the previous claims.

## Patentansprüche

1. Handhabungssystem für fahrzeugeigene Fahrzeuginstrumente, insbesondere für gewerbliche oder Nutzfahrzeuge, umfassend:
eine programmierbare Steuereinheit; einen berührungssensitiven Bildschirm (100), dazu geeignet, zumindest in einem Bereich (103) mindestens ein Ideogramm (2,3) anzuzeigen, welches eine Funktion eines fahrzeugeigenen Instruments darstellt; einen oder mehrere Knöpfe (1,3), welche mit der Funktion des fahrzeugeigenen Instruments verknüpft werden können, wobei die Steuereinheit programmierbar ist, um die Anordnung des Ideogramms in dem Bereich (103) des Bildschirms (100) und die Verknüpfung mit dem Knopf (1,3) zu steuern, wobei eine Anordnungskonfiguration, und zwar eine unterschiedliche Programmierung der Steuereinheit, mit einem unterschiedlichen Transponder eines Zündschlüssels des Fahrzeugs verknüpft ist, wobei es möglich ist, dass zwei oder mehr Zündschlüssel mit derselben Anzahl von unterschiedlichen Programmierungen verknüpft sind,
**dadurch gekennzeichnet, dass**
der berührungssensitive Bildschirm (100) mindestens teilweise aus ist, wenn der Schlüssel nicht im Zündschloss eingesteckt ist, und dadurch, dass
einige Teilbereiche des berührungssensitiven Bildschirms (100) aktiv sind auch dann, wenn ein Zündschlüssel nicht in das Zündschloss eingesteckt ist, welche Teilbereiche Ideogramme zeigen, die mit Funktionen verknüpft sind, die aktiv sind, auch wenn ein Zündschlüssel nicht im Zündschloss eingesteckt ist.

2. Handhabungssystem für fahrzeugeigene Fahrzeuginstrumente gemäß Anspruch 1, wobei die ein oder mehrere Knöpfe mechanischer Art sind oder berührungssensitiver Art sind, basierend auf dem kapazitiven Effekt oder auf der berührungssensitiven Technologie, mit Ideogrammen.

3. Handhabungssystem für fahrzeugeigene Fahrzeuginstrumente gemäß Anspruch 1, wobei der berührungssensitive Bildschirm einen Bereich umfasst, in welchem eine Mehrzahl erster Knöpfe 1 und jeweiliger Ideogramme 2 gezeigt werden, angeordnet neben den jeweiligen Knöpfen, welche die fahrzeugeigene Funktion, gesteuert durch den jeweiligen Knopf, darstellen, welche Knöpfe vom virtuellen Typ sind.

4. Handhabungssystem für fahrzeugeigene Fahrzeuginstrumente gemäß Anspruch 3, wobei mindestens ein oder mehrere Ideogramme immer auf dem Bildschirm gezeigt werden, ohne dass deren Visualisierung mittels einer Menünavigation aktiviert werden muss.

5. Handhabungssystem für fahrzeugeigene Fahrzeuginstrumente gemäß einem der vorhergehenden Ansprüche, **dadurch gekennzeichnet, dass** die Programmierung der Steuereinheit außerhalb des Fahrzeugs durchgeführt wird, und dadurch, dass ein einzelnes Steuergerät für eine Mehrzahl unterschiedlicher Fahrzeuge benutzt werden kann.

6. Handhabungssystem für fahrzeugeigene Fahrzeuginstrumente gemäß Anspruch 1, wobei das Berühren der Knöpfe mit akustischen Warnungen oder mit der Vibration der Knöpfe selbst verknüpft ist.

7. Handhabungssystem für fahrzeugeigene Fahrzeuginstrumente gemäß Anspruch 1, wobei der Bildschirm rekonfiguriert werden kann, um weitere Unterhaltungs- oder Informationsfunktionen oder Tastatur- und Rekonfigurationsmenüfunktionen zu erhalten.

8. Fahrzeug, aufweisend ein Handhabungssystem für fahrzeugeigene Fahrzeuginstrumente gemäß einem der vorhergehenden Ansprüche.

## Revendications

1. Système pour la manipulation et la configuration des systèmes véhiculaires, particulièrement pour des véhicules industriels ou commerciaux, comprenant : une unité de commande programmable ; un affichage tactile (100) adapté pour présenter, au moins dans une zone (103), au moins un idéogramme (2, 3) représentant une fonction d'un instrument embarqué ; un ou plusieurs boutons (1, 3) qui peuvent être associés à ladite fonction dudit instrument embarqué, ladite unité de commande étant programmable afin de commander la disposition dudit idéogramme dans ladite zone (103) de l'affichage (100) et ladite association avec ledit bouton (1, 3), dans lequel une configuration de disposition, à savoir une programmation différente de ladite unité de commande, est associée à un transpondeur différent d'une clé de contact du véhicule, étant possible que deux clés de contact ou plus soient associées au même nombre de différente programmation,
**caractérisé en ce que** l'affichage tactile (100) est au moins partiellement éteint lorsque la clé n'est pas insérée dans la serrure de contact et **en ce que** certaines parties de l'affichage tactile (100) sont aussi actives lorsqu'une clé de contact n'est pas insérée dans la serrure de contact, lesdites parties présentant des idéogrammes associés à des fonctions qui sont aussi actives lorsqu'une clé de contact n'est pas insérée dans la serrure de contact.

2. Système pour la manipulation et la configuration des systèmes véhiculaires selon la revendication 1, dans lequel lesdits un ou plusieurs boutons sont du type mécanique, ou du type tactile, sur la base de l'effet capacitif, ou de la technologie tactile, avec des idéogrammes.

3. Système pour la manipulation et la configuration des systèmes véhiculaires selon la revendication 1, dans lequel ledit affichage tactile comprend une zone, dans laquelle une pluralité de premiers boutons 1 et des idéogrammes respectifs 2 sont présentés, placés à côté des boutons respectifs qui représentent la fonction embarquée commandée par chaque bouton, lesdits boutons étant du type virtuel.

4. Système pour la manipulation et la configuration des systèmes véhiculaires selon la revendication 3, dans lequel au moins un ou plusieurs idéogrammes sont toujours présentés sur écran, sans devoir permettre leur visualisation à l'aide d'une navigation de menus.

5. Système pour la manipulation et la configuration des systèmes véhiculaires selon l'une quelconque des revendications précédentes, **caractérisé en ce que** la programmation de ladite unité de commande est réalisée en dehors du véhicule, et **en ce qu'**un seul dispositif de commande peut être utilisé pour une pluralité de véhicules différents.

6. Système pour la manipulation et la configuration des systèmes véhiculaires selon la revendication 1, dans lequel le toucher des boutons est associé à des avertissements acoustiques, ou à la vibration des boutons eux-mêmes.

7. Système pour la manipulation et la configuration des systèmes véhiculaires selon la revendication 1, dans lequel ledit affichage peut être reconfiguré, afin d'obtenir d'autres fonctions de divertissement ou d'information, ou des fonctions de menu clavier et reconfiguration.

8. Véhicule comprenant un système pour la manipulation et la configuration des systèmes véhiculaires selon l'une quelconque des revendications précédentes.
